# EUROPEAN PATENT APPLICATION

(11) **EP 4 737 425 A1**
(43) Date of publication of application: **06.05.2026**
(21) Application number: 24871563.3
(22) Date of filing: 14.08.2024
(51) Int. Cl.: C04B 35/043, C21C 5/44, F27D 1/00

(54) **METHOD FOR MANUFACTURING UNFIRED BASIC BRICK**

(30) Priority: 26.09.2023 JP 2023163694
(71) Applicant: Krosakiharima Corporation, Kitakyushu-shi, Fukuoka 806-8586 (JP)
(72) Inventor: KAWANO, Hayate, Kitakyushu-shi, Fukuoka 806-8586 (JP)
(74) Representative: Vossius & Partner Patentanwälte Rechtsanwälte mbB
(86) International application number: PCT/JP2024/028987
(87) International publication number: WO 2025/069761

(57) **Abstract**

Provided is an unfired basic brick manufacturing method using a binder capable of suppressing strength deterioration at 400 to 1000°C, without corrosion resistance deterioration caused by formation of a low-melting-point substance and concerns about dissolution of a binder component into molten steel, slaking of magnesia, and the like. The method comprises: adding water to a refractory raw material mixture that contains 0.2% by mass to 30% by mass of magnesia having a particle size of less than 75 µm, and 0.3% by mass to 2.5% by mass of silica having a particle size of less than 75 µm, with the remainder containing magnesia having a particle size of 75 µm or more, and at least one of spinel, alumina, and titania; and subjecting the resulting mixture to kneading, press-molding, and then heat treatment at a temperature of 60°C to 1000°C.

## Description

### TECHNICAL FIELD

The present invention relates to a manufacturing method for an unfired basic brick which is used, in the iron and steel field or the like, as a lining material for molten metal containers or cement rotary kilns.

### BACKGROUND ART

It is often the case that a magnesia-chrome brick having high corrosion resistance is used as a refractory lining material for molten metal containers or cement rotary kilns. However, since the magnesia-chrome brick contains a Cr₂O₃ component, there have been problems in terms of the environmental health because, after use, the brick can contain harmful hexavalent chromium. For this reason, a brick that does not contain Cr₂O₃ in its composition, for example, a so-called chrome-free basic brick, such as a magnesia-alumina based brick, a magnesia-spinel based brick, or a magnesia-titania-alumina based brick, is also used. However, since a commonly-used chrome-free basic brick is produced through firing at a high temperature of 1500°C or more, there are demerits such as CO₂ emission and cost increases. In order to solve this problem, an unfired basic brick manufacturing method has also been studied.

For example, Patent Document 1 and Patent Document 2 disclose a manufacturing method for a magnesia-alumina based unfired basic brick, and a manufacturing method for a magnesia-titania-alumina based unfired base brick, respectively. The Patent Documents 1 and 2 also describe that when an inorganic binder, such as phosphate, silicate, or alumina cement, is used as a binder in the above manufacturing methods, it can facilitate forming a ceramic bond under hot conditions to provide a strong microstructure.

However, when phosphate is used as the binder, it is necessary to use the phosphate in the form of alkali metal phosphate, such as sodium phosphate, so as to prevent a rapid reaction with magnesia. In this case, the alkali metal phosphate reacts with magnesia to form a low-melting-point substance, leading to deterioration in corrosion resistance and failing to obtain sufficient durability. Further, since there is a concern about elution of the phosphorus component into molten steel, the use of phosphate is undesirable. When silicate is used as the binder, alkali metal silicate, such as sodium silicate, is also liable to form a low-melting-point substance, leading to deterioration in corrosion resistance. Further, such an alkaline binder causes an increase in the amount of hydroxyl groups to be supplied to magnesia, and consequently magnesium hydroxide is formed to make slaking (hydration) of the brick more likely to occur, leading to a possibility that cracks occur through storage or use over a long period of time. In order to minimize these harmful influences, it is also conceivable to suppress the amount of alkali metal phosphate or alkali metal silicate used. For example, in the manufacturing methods described in Patent Documents 1 and 2, 0.3 parts by weight of phosphate is used. In this case, however, there is a problem that sufficient strength cannot be obtained. Although there is also an alkali-free silicate binder such as silica sol, this binder is unpractical because when a brick is formed using this binder, the strength of the brick becomes insufficient. When alumina cement is used as the binder, it reacts with a CaO component in slag to form a low-melting-point substance, leading to deterioration in corrosion resistance and failing to obtain sufficient durability.

Patent Document 3 discloses using a magnesium chloride aqueous solution as a binder for a magnesia-spinel based unfired basic brick. In this case, however, the binder component is decomposed in a temperature range of 400 to 1000°C, leading to a problem that strength deterioration and microstructural embrittlement are likely to occur.

### PRIOR ART DOCUMENTS

### [Patent Document]

Patent Document 1: JP H08-143356 A
Patent Document 2: JP H08-310875 A
Patent Document 3: JP 4328053 B

### SUMMARY OF INVENTION

### [Technical Problem]

The technical problem to be solved by the present invention is to provide an unfired basic brick manufacturing method using a binder capable of suppressing strength deterioration at 400 to 1000°C, without corrosion resistance deterioration due to formation of a low-melting-point substance, and concerns about dissolution of a binder component into molten steel, slaking of magnesia, and the like.

### [Solution to Technical Problem]

The summary of the present invention is as follows.
1. A method of manufacturing an unfired basic brick, the method comprising:
   adding water to a refractory raw material mixture that contains 0.2% by mass to 30% by mass of magnesia having a particle size of less than 75 µm, and 0.3% by mass to 2.5% by mass of silica having a particle size of less than 75 µm, with the remainder containing magnesia having a particle size of 75 µm or more, and at least one of spinel, alumina, and titania; and
   subjecting the resulting mixture to kneading, press-molding, and then heat treatment at a temperature of 60°C to 1000°C.
2. The method as set forth in 1, wherein calcined magnesia is used as the magnesia having a particle size of less than 75 µm, and silica flour is used as the silica having a particle size of less than 75 µm.
3. The method as set forth in 1 or 2, wherein a content rate of the magnesia having a particle size of 75 µm or more, contained in the remainder of the refractory raw material mixture, is 50% by mass to 90% by mass, in terms of a proportion in 100% by mass of the refractory raw material mixture.
4. The method as set forth in 3, wherein at least spinel is contained in the remainder of the refractory raw material mixture, wherein a content rate of the spinel is 5% by mass to 40% by mass, in terms of a proportion in 100% by mass of the refractory raw material mixture.
5. The method as set forth in 3, wherein at least alumina is contained in the remainder of the refractory raw material mixture, wherein a content rate of the alumina is 1% by mass to 15% by mass, in terms of a proportion in 100% by mass of the refractory raw material mixture.
6. The method as set forth in 3, wherein at least titania is contained in the remainder of the refractory raw material mixture, wherein a content rate of the titania is 1% by mass to 15% by mass, in terms of a proportion in 100% by mass of the refractory raw material mixture.

### [Advantageous Effects of Invention]

In the manufacturing method according to the present invention, magnesium silicate hydrate is formed as a binder. This makes it possible to obtain an unfired basic brick that has less strength deterioration at 400 to 1000°C, without corrosion resistance deterioration due to formation of a low-melting-point substance, and concerns about dissolution of a binder component into molten steel, slaking of magnesia, and the like.

### DESCRIPTION OF EMBODIMENTS

The present inventor has found that an unfired basic brick having sufficient strength and corrosion resistance can be obtained by: adding water to a refractory raw material mixture containing a magnesia fine powder and a silica fine powder; and subjecting the resulting mixture to kneading, press-molding, and then heat treatment at a temperature of 60°C to 1000°C

The mechanism is considered as follows. A magnesia fine powder and a silica fine powder form gel-like magnesium silicate hydrate in the presence of water. Thus, when the water content of a brick decreases through the heat treatment even at a temperature of 60°C or more, the magnesium silicate hydrate functions as a binder in a matrix part of the brick. Subsequently, even when the magnesium silicate hydrate is dehydrated due to a rise in the temperature of the brick, the strength of the brick is maintained because magnesium silicate having an amorphous bond network is formed. When the brick is further subjected to heat, the amorphous magnesium silicate is transformed into forsterite, so that it is possible to suppress deterioration in strength over a temperature range up to a use temperature of the brick. This bond network of magnesium silicate is characterized in that it has high hot strength, particularly, at 600 to 1000°C, and when used as a lining material for molten metal containers or cement rotary kilns, it exhibits a great effect of suppressing peel-off of a working surface caused by brittleness of the microstructure of the brick.

In the present invention, as a magnesia component for forming magnesium silicate hydrate, a magnesia fine powder is used at a content rate of 0.2% by mass to 30% by mass, in terms of a proportion in 100% by mass of the refractory raw material mixture. Since as the particle size of the magnesia fine powder becomes smaller, it becomes easier to form hydrate in the presence of water, a specific value of the particle size thereof to be used is less than 75 µm. That is, in the present invention, the refractory raw material mixture contains a magnesia fine powder, which is magnesia having a particle size of less than 75 µm, at a rate of 0.2% by mass to 30% by mass. If the content rate of the magnesia fine powder is less than 0.2% by mass, a binding microstructure in the brick microstructure becomes insufficient, leading to poor strength. On the other hand, if the content rate exceeds 30% by mass, moldability is deteriorated due to too much fine powders, causing occurrence of lamination and corrosion resistance deterioration.

In the present invention, light-fired magnesia (i.e., light-burned magnesia) may be used as the magnesia fine powder. The light-fired magnesia is obtained by firing magnesite, magnesium hydroxide, or the like at a relatively low temperature of, e.g., 1400°C or less, typically 1000 to 1400°C. Generally, it is also referred to as "active magnesia" or "calcined magnesia", wherein it has an average particle size of 1 µm or less. Since this light-fired magnesia has a large specific surface area and is highly active, it is easily dissolved in water as compared with sintered magnesia or electrofused magnesia. Thus, the bond network of magnesium silicate is well developed in the brick microstructure, so that it is possible to increase the strength of the brick. This light-fired magnesia may be used at a content rate of 0.2% by mass to 5% by mass in terms of a proportion in 100% by mass of the refractory raw material mixture.

Further, in the present invention, as a silica component for forming magnesium silicate hydrate, a silica fine powder, which is silica having a particle size of less than 75 µm, is used at a content rate of 0.3% by mass to 2.5% by mass in terms of a proportion in 100% by mass of the refractory raw material mixture. If the content rate of the silica fine powder is less than 0.3% by mass, the binding strength of the brick microstructure becomes insufficient. On the other hand, if the content rate exceeds 2.5% by mass, a flux component in the brick microstructure increases, leading to a deterioration in corrosion resistance.

As the silica fine powder, it is possible to use silica flour, fused silica, silica sol, or a fine powder of silica stone. It should be noted here that since the silica sol is in liquid form, the content rate thereof is a value converted to SiO₂.

Further, in the present invention, the silica flour is fine-particle silica having an average particle size of 10 µm or less, and refers collectively to silica fume, fumed silica, and white carbon. The silica fume is a by-product obtained by collecting exhaust gas generated in a refining process of ferrosilicon, metal silicon, electrofused zirconia, or the like, and is available relatively inexpensively. The fumed silica is produced by hydrolyzing a silicon compound such as silicon tetrachloride as a raw material, in a flame of oxygen and hydrogen. The white carbon is obtained by decomposition sodium silicate using acid or alkali. Since these silica flour are easily dissolved in alkaline water in which the magnesia fine powder is partially dissolved, the bond network of magnesium silicate is well developed in the brick microstructure, so that it is possible to increase the strength of the brick.

A raw material composition other than the magnesia having a particle size of less than 75 µm and the silica having a particle size of less than 75 µm, which are contained in the refractory raw material mixture in the present invention, i.e., a raw material composition of the remainder of the refractory raw material mixture, may be a raw material composition commonly used in conventional magnesia-spinel bricks, magnesia-alumina bricks, magnesia-titania-alumina bricks, and the like. It should be noted that the content rate of each raw material described below means a proportion in 100% by mass of the refractory raw material mixture.

First, the content rate of the magnesia having a particle size of 75 µm or more, which is a raw material essential for the remainder, may be set in the range of 50% by mass to 90% by mass. Further, the remainder contains at least one of spinel, alumina, and titania. Among them, spinel may be used at a content rate of 5% by mass to 40% by mass, mainly for the purpose of improving spalling resistance. Alumina may be used at a content rate of 1% by mass to 15% by mass, mainly for the purpose of improving spalling resistance. Titania may be used at a content rate of 1% by mass to 15% by mass, mainly for the purpose of improving corrosion resistance. The particle sizes of the alumina and the titania are preferably set to less than 0.1 mm, from a viewpoint of enhancing the spalling resistance improving effect and the corrosion resistance improving effect, respectively.

Secondly, the types, etc., of the raw materials will be described. Magnesia usable herein may be of a type in which the content rate of an MgO component is 90% by mass or more, and examples of the magnesia may include electrofused magnesia and sintered magnesia. Spinel usable herein may be of a type in which the content rate of Al₂O₃ is 60 to 90% by mass, and the content rate of MgO is 10 to 40% by mass, wherein the total content rate of Al₂O₃ and MgO is 95% by mass or more. Alumina usable herein may be of a type in which the content rate of Al₂O₃ is 90% by mass or more, and examples of the aluminum may include electrofused alumina, sintered alumina, and calcined alumina. Titania usable herein may be of a type in which the content rate of TiO₂ is 90% by mass or more, and examples of the titania may include natural titania and artificial titania.

In the present invention, as a refractory raw material other than the above-mentioned magnesia, spinel, alumina, titania, and silica having a particle size of less than 75 µm, the refractory raw material mixture may contain one or more of metal powder, silicon carbide, graphite, pitch, carbon black, zirconia, glass powder, zirconia, zircon, and boron carbide, at a content rate of 5% by mass or less.

In the unfired basic brick manufacturing method according to the present invention, water is added to the above-mentioned refractory raw material mixture, and the resulting mixture is subjected to kneading, press-molding and then heat treatment at a temperature of 60°C to 1000°C. The water may be added in an appropriate amount according to a raw material composition, etc., to form a magnesium silicate hydrate as a binder and to ensure moldability of the kneaded mixture. Specifically, the water may be added at an addition rate of 0.5% by mass to 8% by mass with respect to 100% by mass of the refractory raw material mixture. In this process, an organic solvent, such as ethylene glycol or methanol, compatible with water, may be used in combination with water.

In the present invention, since the magnesium silicate hydrate functions as a binder, it is not necessary to contain, as a binder, alkali metal phosphate and/or alkali metal silicate as in conventional unfired bricks. Thus, the alkali metal phosphate and/or the alkali metal silicate need not be used, but may be used supplementarily. In this case, however, the total content rate of them is preferably set to 1% by mass or less, more preferably less than 0.2% by mass. If the total content rate of them exceeds 1% by mass, there is a concern about deterioration in corrosion resistance or creep resistance. Moreover, the alkali metal phosphate involves a concern about elution of the phosphate component into molten steel. Here, the alkali metal silicate is sodium silicate, potassium silicate, or the like, and the alkali metal phosphate is sodium phosphate, potassium phosphate, or the like.

Further, in the present invention, basically, sufficient strength can be obtained without using any additional binder. However, an additional binder may be used in combination. That is, in the present invention, any binder commonly used for refractory bricks may be used in combination.

Here, the term "particle size" in the present invention means a sieve mesh size when refractory raw material particles are screened and separated by a sieve. For example, magnesia having a particle size of less than 75 µm means magnesia which can pass through a sieve having a mesh size of 75 µm, and magnesia having a particle size of 75 µm or more means magnesia which cannot pass through the sieve having a mesh size of 75 µm.

Further, the term "average particle size" in the present invention means a volume average particle size corresponding to a median cumulative value (D50) of a cumulative curve measured by a laser diffraction scattering particle size distribution meter.

### EXAMPLES

Table 1 shows the composition of a refractory raw material mixture in each of Inventive Examples and Comparative Examples, and evaluation results of the obtained bricks.

**[Table 1]**

| | | Comparative Example 1 | Inventive Example 1 | Inventive Example 2 | Inventive Example 3 | Inventive Example 4 | Inventive Example 5 | Inventive Example 6 | Inventive Example 7 |
|---|---|---|---|---|---|---|---|---|---|
| Magnesia | 75µm or more | 84 | 72,8 | 72 | 68 | 72 | 68 | 61 | 54 |
| | less than 75µm | | | | | 1 | 16 | 23 | 30 |
| Light-fired magnesia | 1µm or less on average | | 0,2 | 1 | 5 | | | | |
| Electrofused spinel | 75µm or more | | | | | | | 8 | 15 |
| | less than 75µm | 15 | 26 | 26 | 26 | 26 | 15 | 7 | |
| Silica flour | 10µm or less on average | 1 | 1 | 1 | 1 | 1 | 1 | 1 | 1 |
| Silica stone | less than 75µm | | | | | | | | |
| Silica sol | SiO₂: 40 mass% | | | | | | | | |
| Total of refractory raw material mixture/mass% | | 100 | 100 | 100 | 100 | 100 | 100 | 100 | 100 |
| Water /mass% | | 3 | 3 | 3 | 3 | 3 | 3 | 3 | 3 |
| Modulus of rupture at normal temperature/MPa | Heat treatment at 100°C | | | 6,2 | 9,4 | 4,8 | 12,1 | | |
| | Heat treatment at 250°C | 3,1 | 4,8 | 6,5 | 10,2 | 5,1 | 14,3 | 15,7 | 8,8 |
| | Heat treatment at 600°C | | | 7,8 | 11,6 | 6,6 | 10,1 | | |
| | Heat treatment at 1000°C | | | 10,8 | 14,8 | 7,8 | 10,7 | | |
| Hot modulus of rupture/MPa | | 1,2 | 2,0 | 2,5 | 8,3 | 2,1 | 8,4 | 8,3 | 5,7 |
| Spalling resistance | | × | Δ | ○ | ○ | Δ | ○ | O | Δ |
| Corrosion resistance (index) | | 100 | 91 | 86 | 80 | 92 | 88 | 88 | 94 |

| | | Comparative Example 2 | Comparative Example 3 | Inventive Example 8 | Inventive Example 9 | Inventive Example 10 | Inventive Example 11 | Inventive Example 12 | Comparative Example 4 |
|---|---|---|---|---|---|---|---|---|---|
| Magnesia | 75µm or more | 44 | 68 | 68 | 68 | 68 | 68 | 68 | 68 |
| | less than 75µm | 40 | 16 | 15,7 | 15,3 | 15 | 15 | 13,5 | 13 |
| Light-fired magnesia | 1 µm or less on average | | 1 | 1 | 1 | 1 | 1 | 1 | 1 |
| Electrofused spinel | 75µm or more | 15 | | | | | | | |
| | less than 75µm | | 15 | 15 | 15 | 15 | 15 | 15 | 15 |
| Silica flour | 10µm or less on average | 1 | | 0,3 | 0,7 | | | 2,5 | 3 |
| Silica stone | less than 75µm | | | | | 1 | | | |
| Silica sol | SiO₂: 40 mass% | | | | | | 1 | | |
| Total of refractory raw material mixture/mass% | | 100 | 100 | 100 | 100 | 100 | 100 | 100 | 100 |
| Water /mass% | | 3 | 3 | 3 | 3 | 3 | 1,5 | 3 | 3 |
| Modulus of rupture at normal temperature/MPa | Heat treatment at 100°C | | | | | | | | |
| | Heat treatment at 250°C | 3,9 | 3,5 | 8,6 | 11,3 | 10,3 | 11,6 | 10,8 | 3,8 |
| | Heat treatment at 600°C | | | | | | | | |
| | Heat treatment at 1000°C | | | | | | | | |
| Hot modulus of rupture/MPa | | 1,6 | 1,1 | 5,6 | 6,9 | 6,6 | 7,2 | 7,0 | 1,3 |
| Spalling resistance | | × | × | Δ | ○ | ○ | ○ | Δ | × |
| Corrosion resistance (index) | | 110 | 105 | 96 | 88 | 92 | 90 | 99 | 120 |

| | | Inventive Example 13 | Inventive Example 14 | Inventive Example 15 | Inventive Example 16 | Inventive Example 17 | Inventive Example 18 | Inventive Example 19 | Inventive Example 20 |
|---|---|---|---|---|---|---|---|---|---|
| Magnesia | 75µm or more | 50 | 90 | 72 | 68 | 68 | 72 | 68 | 68 |
| | less than 75µm | 8 | 8 | 20 | 15 | 10 | 20 | 15 | 10 |
| Light-fired magnesia | 1 µm or less on average | 1 | 1 | 1 | 1 | 1 | 1 | 1 | 1 |
| Electrofused spinel | 75µm or more | 20 | | | | | | | |
| | less than 75µm | 20 | | | | | | | |
| Sintered alumina | less than 75µm | | | | 5 | 10 | | | |
| calcined alumina | 10µm or less on average | | | 1 | 5 | 5 | 5 | 5 | 5 |
| Rutile | less than 75µm | | | 5 | 5 | 5 | 1 | 10 | 15 |
| Silica flour | 10µm or less on average | 1 | 1 | 1 | 1 | 1 | 1 | 1 | 1 |
| Sodium phosphate | | | | | | | | | |
| Total of refractory raw material mixture/mass% | | 100 | 100 | 100 | 100 | 100 | 100 | 100 | 100 |
| **Water** /mass% | | 3 | 3 | 3 | 3 | 3 | 3 | 3 | 3 |
| Modulus of rupture at normal temperature/MPa | Heat treatment at 250°C | 9,8 | 12 | 12,2 | 13,9 | 10,2 | 11,7 | 14,1 | 11,2 |
| Hot modulus of rupture/MPa | | 5,7 | 7,4 | 6,9 | 6,6 | 5,7 | 6,7 | 8,4 | 8,7 |
| Spalling resistance | | O | Δ | Δ | ○ | ○ | O | Δ | Δ |
| Corrosion resistance (index) | | 92 | 98 | 78 | 68 | 83 | 75 | 69 | 65 |

| | | Inventive Example 21 | Inventive Example 22 | Inventive Example 23 | Inventive Example 24 | Inventive Example 25 | Inventive Example 26 | Inventive Example 27 | Comparative Example 5 |
|---|---|---|---|---|---|---|---|---|---|
| Magnesia | 75µm or more | 73 | 68 | 68 | 74 | 60 | 69,8 | 67 | 70,7 |
| | less than 75µm | 20 | 15 | 15 | 19 | 21 | | | |
| Light-fired magnesia | 1 µm or less on average | 1 | 1 | 1 | 1 | 1 | 3 | 5 | 3 |
| Electrofused spinel | 75µm or more | | | | | 15 | | | |
| | less than 75µm | | 10 | 7 | | | 26 | 26 | 26 |
| Sintered alumina | less than 75µm | | | | | | | | |
| calcined alumina | 10µm or less on average | | 5 | 5 | 5 | | | | |
| Rutile | less than 75µm | 5 | | 3 | | 2 | | | |
| Silica flour | 10µm or less on average | 1 | 1 | 1 | 1 | 1 | 1 | 1 | |
| Sodium phosphate | | | | | | | 0,2 | 1 | 0,3 |
| Total of refractory raw material mixture/mass% | | 100 | 100 | 100 | 100 | 100 | 100 | 100 | 100 |
| Water /mass% | | 3 | 3 | 3 | 3 | 3 | 3 | 3 | 3 |
| Modulus of rupture at normal temperature/MPa | Heat treatment at 250°C | 11,5 | 13,1 | 14,4 | 11,2 | 12,2 | 8,6 | 13,2 | 3,6 |
| Hot modulus of rupture/MPa | | 6,1 | 7,4 | 8,8 | 7,2 | 6,9 | 6,3 | 9,1 | 1,7 |
| Spalling resistance | | △ | O | ○ | ○ | △ | ○ | ○ | × |
| Corrosion resistance (index) | | 95 | 70 | 62 | 77 | 75 | 82 | 96 | 100 |

Among refractory raw materials, as magnesia, electrofused magnesia and light-fired magnesia each comprising 98% by mass of MgO were used, and as spinel, electrofused spinel comprising 22% by mass of MgO and 73% by mass of Al₂O₃ was used. Further, as alumina, sintered alumina and calcined alumina each comprising 98% by mass of Al₂O₃ were used, and as titania, rutile comprising 98% by mass of TiO₂ was used. Further, as a silica fine powder having a particle size of less than 75 µm, silica flour comprising 98% of a SiO₂ component, a silica stone fine powder comprising 98% of a SiO₂ component, and silica sol comprising 40% of a SiO₂ component, were used. Note that the content rate of silica sol shown in Table 1 is a value converted to SiO₂, as mentioned above.

An unfired basic brick was prepared by: adding water to each refractory raw material mixture in Inventive and Comparative Examples listed in Table 1, at a corresponding additive rate listed in Table 1; kneading the resulting mixture; molding the kneaded mixture into a shape of 230 mm × 114 mm × 100 mm by oil press; and then subjecting the resulting molded body to heat treatment at 250°C for a holding time of 5 hours. Further, with respect to each of Inventive Examples 2 to 5, four unfired basic bricks subjected to heat treatment at different temperatures were prepared. Samples for measuring physical properties were cut out from these bricks, and subjected to measurements of bending strength at normal temperature and bending strength at 600°C and to evaluations of spalling resistance and corrosion resistance.

The bending strength at normal temperature was measured by three-point bending. Specifically, a reed-shaped sample having a size of 20 × 20 × 80 mm was prepared, and subjected to measurement of the bending strength at a pressing speed of 1.65 kN/s.

The measurement of the modulus of rupture at 600°C was conducted by three-point bending method on the brick in each Example, obtained at a heat treatment temperature of 250°C. Specifically, a reed-shaped sample having a size of 20 × 20 × 80 mm was prepared, and heated up to 600°C in a preheating furnace. Then, the sample was transferred to a test furnace, where after reaching 600°C, it was held for 20 minutes, and subjected to measurement of the hot modulus of rupture at a crosshead speed of 0.05 mm/s.

The spalling resistance was evaluated in a rapid-cooling spalling test. In the rapid-cooling spalling test, a cycle consisting of: placing a cubic sample having a side length of 50 mm, in an electric furnace heated to 1400° C; and after the elapse of 15 minutes, taking out the sample from the electric furnace to air-cool the sample, was repeated fifteen times. In the evaluation of spalling resistance, a sample in which a portion thereof was peeled off before completion of the fifteen cycles was evaluated as × (NG), a sample in which a large crack was visually observed after completion of the fifteen cycles was evaluated as Δ (Allowable), and a sample in which only a small crack was observed was evaluated as o (Good).

Corrosion resistance was evaluated by a rotation corrosion test. In the rotation corrosion test, the inner surface of a drum having a horizontal rotation axis was lined with a brick under test, and slag was charged into the drum and heated, thereby causing corrosion of the surface of the brick. An oxygen-propane burner was used as a heating source, and a test temperature was set to 1700°C. Further, the slag had a composition of CaO: 30% by mass, SiO₂: 30% by mass, Al₂O₃: 20% by mass, and FeO + Fe₂O₃: 20% by mass, and the discharge and charge of the slag were repeated ten times every 30 minutes. After completion of the test, a corrosion amount (mm) was obtained from the difference (mm) between thicknesses before and after the test at the maximum worn area of each brick. Then, a wear index on the basis of the corrosion amount (mm) of "Comparative Example 1" listed in Table 1 being taken as 100 was obtained. A smaller value of this wear index indicates better corrosion resistance.

Inventive Examples 1 to 7, which are different from each other in terms of the content rate of a magnesia fine powder, i.e., magnesia having a particle size of less than 75 µm, but fall within the scope of the present invention, had a good result. Further, from the results of Inventive Examples 2 to 5 each subjected to heat treatment under different conditions, it can be seen that sufficient strength can be obtained, irrespective of changes in the heat treatment temperature.

On the other hand, Comparative Example 1, in which no magnesia fine powder is contained, had poor strength and insufficient corrosion resistance. Further, Comparative Example 2, in which the content rate of the magnesia fine powder exceeds the upper limit of the present invention, was impaired in terms of fillability of the raw materials during the press-molding due to an excessive amount of fine particles, resulting in poor strength and insufficient spalling and corrosion resistances.

Examples 8 to 12, which are different from each other in terms of the content rate of silica fine powder, i.e., silica having a particle size of less than 75 µm, but fall within the scope of the present invention, had a good result. On the other hand, Comparative Example 3, in which no silica fine powder is contained, had poor strength and insufficient spalling and corrosion resistances. Comparative Example 4, in which the content rate of the silica fine powder exceeds the upper limit of the present invention, was deteriorated in terms of the spalling resistance and the corrosion resistance.

Examples 13 and 14, which are different from each other in terms of the content rate of magnesia having a particle size of 75 µm or more, but fall within the scope of the present invention, had a good result.

Examples 15-17, which are different from each other in terms of the content rate of alumina in magnesia-titania-alumina based bricks, but fall within the scope of the present invention, had a good result.

Examples 18-20, which are different from each other in terms of the content rate of titania in the magnesia-titania-alumina based bricks, but fall within the scope of the present invention, had a good result.

Examples 21-25, which are different from each other in terms of the content rate of titania, alumina, and spinel, but fall within the scope of the present invention, had a good result.

Examples 26 and 27, in which sodium phosphate was used in combination as the binder, but fall within the scope of the present invention, had a good result. On the other hand, Comparative Example 5, in which only sodium phosphate is used as a binder without containing any silica fine powder, had poor strength and insufficient spalling and corrosion resistances.

## Claims

1. A method of manufacturing an unfired basic brick, the method comprising:
adding water to a refractory raw material mixture that contains 0.2% by mass to 30% by mass of magnesia having a particle size of less than 75 µm, and 0.3% by mass to 2.5% by mass of silica having a particle size of less than 75 µm, with the remainder containing magnesia having a particle size of 75 µm or more, and at least one of spinel, alumina, and titania; and
subjecting the resulting mixture to kneading, press-molding, and then heat treatment at a temperature of 60°C to 1000°C.

2. The method as claimed in claim 1, wherein light-fired magnesia is used as the magnesia having a particle size of less than 75 µm, and silica flour is used as the silica having a particle size of less than 75 µm.

3. The method as claimed in claim 1 or 2, wherein a content rate of the magnesia having a particle size of 75 µm or more, contained in the remainder of the refractory raw material mixture, is 50% by mass to 90% by mass, in terms of a proportion in 100% by mass of the refractory raw material mixture.

4. The method as claimed in claim 3, wherein at least spinel is contained in the remainder of the refractory raw material mixture, wherein a content rate of the spinel is 5% by mass to 40% by mass, in terms of a proportion in 100% by mass of the refractory raw material mixture.

5. The method as claimed in claim 3, wherein at least alumina is contained in the remainder of the refractory raw material mixture, wherein a content rate of the alumina is 1% by mass to 15% by mass, in terms of a proportion in 100% by mass of the refractory raw material mixture.

6. The method as claimed in claim 3, wherein at least titania is contained in the remainder of the refractory raw material mixture, wherein a content rate of the titania is 1% by mass to 15% by mass, in terms of a proportion in 100% by mass of the refractory raw material mixture.
